# EUROPÄISCHE PATENTANMELDUNG

(11) **EP 0 713 079 A2**
(43) Veröffentlichungstag der Anmeldung: **22.05.1996**
(21) Anmeldenummer: 95118288.0
(22) Anmeldetag: 21.11.1995
(51) Int. Cl.: G01F 1/32

(54) **Messwertgeber für einen Wirbeldurchflussmesser**

(30) Priorität: 21.11.1994 DE 4441129
(71) Anmelder: JUNKALOR GmbH DESSAU, D-06847 Dessau (DE)
(72) Erfinder: Osterloh, Ingo, D-06847 Dessau (DE)
(74) Vertreter: Lenzing, Andreas

(57) **Zusammenfassung**

Die Erfindung betrifft einen Meßwertgeber für einen Wirbeldurchflußmesser mit einem Staukörper, mit einem stromab von dem Staukörper liegenden Abtastelement, sowie mit einem dem Abtastelement zugeordneten, darin eingebetteten elektromechanischen Wandler, bei dem zwischen dem elektromechanischen Wandler und dem Abtastelement zumindest abschnittsweise eine verformbare Ausgleichsschicht vorgesehen ist.

## Beschreibung

Die Erfindung betrifft einen Meßwertgeber für einen Wirbeldurchflußmesser mit den Merkmalen des Oberbegriffs des Anspruchs 1.

Derartige Meßwertgeber sind bekannt beispielsweise aus der DE-OS 24 15 583 und aus der DD-PS 127531.

Insbesondere aus der der vorliegenden Erfindung am nächsten kommenden DD-PS 127531 ist ein Wirbeldurchflußmesser bekannt, der einen in einem durchströmten Rohr angeordneten Staukörper umfaßt, dessen stromab angeordnete Seite eine Platte trägt, die an ihrer Oberfläche wiederum mit Dehnmeßstreifen versehen ist.

Es sind auch Wirbeldurchflußmesser bekannt, bei denen piezoelektrische Sensoren vom strömenden Medium isoliert innerhalb oder außerhalb des Staukörpers angeordnet sind.

Die Funktionsweise des Wirbeldurchflußmessers beruht darauf, daß an der Stirnseite, genauer gesagt an den Abrißkanten des Staukörpers bei dessen Anströmung auf den beiden Seiten abwechselnd Wirbel induziert werden, die eine regelmäßige Wirbelschleppe bilden. Diese Wirbelschleppe ist als Karman'sche Wirbelstraße bekannt. Die sich ablösenden Wirbel streifen an der Rückseite des Staukörpers an der Platte vorbei und induzieren hier wechselseitige Druckbelastungen, deren Frequenz abhängig von der Strömungsgeschwindigkeit des zu erfassenden Mediums ist.

Bei den bekannten Wirbeldurchflußmessern besteht das Problem, daß bei Verwendung von Dehnmeßstreifen und deren Anbringung an der Außenseite der Platte keine bezüglich Temperatur, Temperaturschock und korrosiven Medien resistente Ausführungsform geschaffen werden konnte. Wenn piezoelektrische Sensoren innerhalb des Staukörpers angeordnet sind, sind sie mechanisch so mit dem Staukörper verbunden, daß der gesamte Meßwertgeber nur eine begrenzte Temperatur- und Temperaturschockfestigkeit aufweist.

Es ist daher Aufgabe der vorliegenden Erfindung, einen Meßwertgeber für einen Wirbeldurchflußmesser zu schaffen, der im Betrieb weniger anfällig ist.

Diese Aufgabe wird durch einen Meßwertgeber mit den Merkmalen des Anspruchs 1 gelöst.

Weil zwischen dem elektromechanischen Wandler und dem Abtastelement zumindest abschnittsweise eine verformbare Ausgleichsschicht vorgesehen ist, sind mit dem erfindungsgemäßen Meßwertgeber eine Temperaturfestigkeit bis ca. 700 °C sowie einen Temperaturschockfestigkeit bis etwa 100 °C/sec. zu realisieren. Dabei kann die Zwischenschicht die aufgrund unterschiedlicher Ausdehnungskoeffizienten auftretenden mechanischen Spannungen aufnehmen. Hier ist insbesondere ein Glasseidenlaminat als Ausgleichsschicht vorteilhaft.

Vorteilhafte Abtasteigenschaften ergeben sich, wenn der elektromechanische Wandler des Meßwertgebers ein piezoelektrisches Element umfaßt.

Es ist insbesondere vorteilhaft, wenn das piezoelektrische Element ein Lithiumniobat-Einkristall umfaßt, weil dieses Piezoelement für die vorgesehene Anwendungsform in der Summe die günstigsten Eigenschaften aufweist, insbesondere die genannte Temperaturfestigkeit und gute elektrische Eigenschaften besitzt.

Eine unter den angestrebten Bedingungen zuverlässige Kontaktierung des piezoelektrischen Elements ist mittels eines elektrisch leitenden Klebstoffs durchführbar. Es ist dabei vorteilhaft, wenn zwischen dem piezoelektrischen Element und dem Klebstoff eine Diffusionssperre vorgesehen ist, die bei den angestrebten hohen Temperaturen das Diffundieren von Metallatomen in die Kristallstruktur des piezoelektrischen Elements verhindert.

Eine sehr robuste Ausführungsform ergibt sich, wenn das Abtastelement aus zwei streifenartigen Bereichen zusammengesetzt ist, die zwischen sich einen Hohlraum einschließen. Die streifenartigen Bereiche können beispielsweise Bleche aus korrosionsfestem Stahl sein, die miteinander verschweißt sind und zwischen die das piezoelektrische Element eingesetzt wird. Das aus den streifenartigen Bereichen zusammengesetzte Abtastelement wird dann vorteilhaft auch mit dem Staukörper gasdicht verbunden, insbesondere verschweißt, so daß das Innere des Meßwertgebers gegenüber dem heißen und möglicherweise korrosiven Medium möglichst gut geschützt wird.

Es ist schließlich vorteilhaft, wenn das piezoelektrische Element in einem von Staukörper und Abtastelement begrenzten Hohlraum angeordnet und mittels einer nichtleitenden Vergußmasse mechanisch fixiert ist.

In der Zeichnung ist ein Ausführungsbeispiel eines erfindungsgemäßen Meßwertgebers dargestellt. Es zeigen:
- Figur 1:: einen erfindungsgemäßen Meßwertgeber in einer perspektivischen Darstellung;
- Figur 2:: den Meßwertgeber gemäß Figur 1 in einem Querschnitt von oben;
- Figur 3:: den Meßwertgeber gemäß Figur 1 in einem Querschnitt von der Seite; sowie
- Figur 4:: das piezoelektrische Element des Meßwertgebers gemäß Figur 1 bis 3 in einer vergrößerten Darstellung.

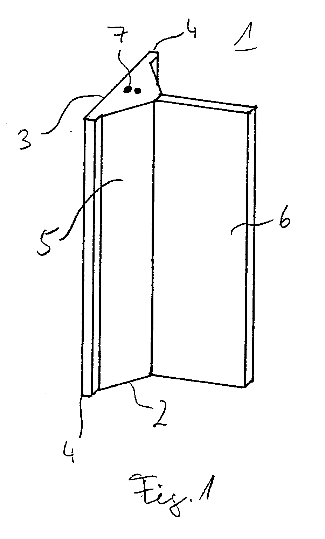

In der Figur 1 ist ein Meßwertgeber für einen Wirbeldurchflußmesser insgesamt mit 1 bezeichnet. Der Meßwertgeber umfaßt einen Staukörper 2, mit einer stromaufwärts liegenden Stirnseite 3, zwei Abrißkanten 4 sowie einem dachförmig auslaufenden rückwärtigen Abschnitt 5, an dessen stromab liegender Seite eine Abtastplatte 6 angeordnet ist.

An der in Figur 1 sichtbaren Oberseite des Staukörpers sind zwei elektrische Anschlüsse 7 vorgesehen, mit denen das Signal des im Inneren des Meßwertgebers angeordneten elektromechanischen Wandlers aus dem Meßwertgeber herausgeführt wird.

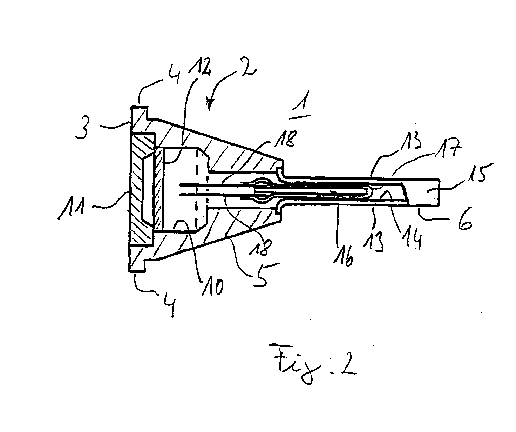

In der Figur 2 ist der Meßwertgeber gemäß Figur 1 in einem Querschnitt von oben dargestellt, wobei der Schnitt etwa auf halber Höhe des Meßwertgebers in Figur 1 verläuft.

Der Staukörper 2 weist innen einen Hohlraum 10 auf, der zu der Stirnseite 3 des Staukörpers 2 hin von einem Verschlußstopfen 11 verschlossen ist. An der dem Verschlußstopfen 11 zugewandten Seite des Hohlraums 10 ist eine Isolierplatte 12 vorgesehen. An dem stromabwärts liegenden Ende des Hohlraums 10 ist der Staukörper 2 zu der Abtastplatte 6 hin offen. Die Abtastplatte 6 ist aus zwei streifenförmigen Bereichen 13 zusammengesetzt, die zwischen sich einen Innenraum 14 einschließen, der wiederum von Randbereichen 15 nach außen hin begrenzt wird. Der Innenraum 14 des Abtastelements 6 und der Innenraum 10 des Staukörpers 12 stehen miteinander in Verbindung. Das Abtastelement 6 ist im Bereich der stromab liegenden Seite des Staukörpers mit diesem gasdicht verbunden.

Ein piezoelektrisches Element 16 in Gestalt eines plattenförmigen Lithiumniobat-Einkristalls ist im Innenraum des Meßwertgebers so angeordnet, daß es etwa auf ¾ seiner Länge innerhalb des Abtastelements 6 liegt, und zwar parallel zu dessen Planseiten 13. Das piezoelektrische Element 16 ist von einer verformbaren Ausgleichsschicht 17 umgeben, die ein Glasseidenlaminat umfaßt. An der stromaufwärts gerichteten Seite des piezoelektrischen Elements 16 sind beidseitig je eine elektrische Ableitung 18 vorgesehen, die zu den elektrischen Anschlüssen in Figur 1 geführt sind. An dem Kristall sind die Anschlüsse 18 mit einem elektrisch leitfähigen Keramikkleber befestigt.

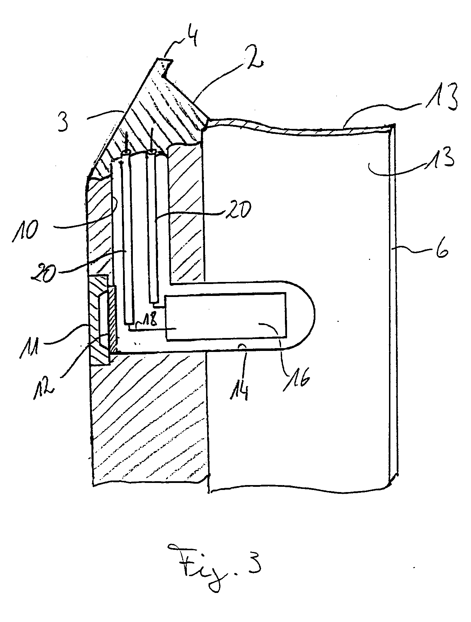

Die Figur 3 zeigt einen Querschnitt durch den Meßwertgeber gemäß Figur 1 in einer Seitenansicht, wobei die Schnittebene mittig und parallel zu den Planseiten 13 des Abtastelements 6 verläuft. Das Piezoelement 16 liegt entsprechend der Darstellung in Figur 2 parallel zu dem Abtastelement 6 im Bereich einer Ausnehmung, aus der es mit etwa ¼ seiner Gesamtlänge in den Staukörper 2 hineinreicht. Die Isolierscheibe 12 und der Verschlußstopfen 11 liegen in Richtung des Piezoelements 12 an der Stirnseite des Staukörpers 2, wo sie den Innenraum 10 des Staukörpers 2 verschließen. Die von dem Verschlußstopfen 11 verschlossene Öffnung in der Stirnseite 3 des Staukörpers 2 ist erforderlich, um das Piezoelement 16 in den Meßwertgeber einführen zu können. Die Figur 3 zeigt auch die elektrischen Ableitungen 18, die von Schutzhüllen 20 geschützt im Inneren des Staukörpers 2 in einem Kanal zu den elektrischen Anschlüssen 7 an der Oberseite des Staukörpers geführt werden.

Zur Herstellung des Meßwertgebers 1 werden im Bereich der Abtastplatte 6 vorzugsweise Edelstahlbleche miteinander verschweißt, wobei eine Ausnehmung 14 zwischen den beiden Edelstahlblechen vorgesehen ist. Diese plattenförmige Anordnung wird sodann an einem ebenfalls aus Edelstahl gefertigten Staukörper 2 angeschweißt, so daß die Abtastplatte 6 entlang ihrem Umfang und im Bereich der Verbindungsstelle mit dem Staukörper 2 gasdicht verschlossen ist. In den Staukörper 2, genauer gesagt in seinen von der Stirnseite 3 her zugänglichen Innenraum wird dann das piezoelektrische Element eingesetzt und der Innenraum wird mit einer elektrisch nicht leitenden, keramischen Vergußmasse gefüllt.

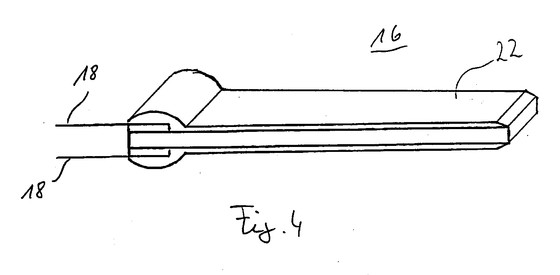

Das Piezoelement 16 selbst ist in der Figur 4 genauer dargestellt. Das plattenförmige Lithiumniobat-Einkristall ist an seinen beiden Planseiten, die in der Einbauposition parallel zu den Planseiten des Abtastelements 6 angeordnet sind, mit einer leitfähigen Keramikmasse 22 beschichtet. An einem Ende des Kristalls ist die leitfähige Keramikmasse 22 verdickt aufgetragen, wobei in dem verdickten Bereich die elektrischen Ableitungen 18 angeklebt sind. Für die Klebeverbindung der elektrischen Ableitungen 18 wird dieselbe leitfähige Keramikmasse 22 benutzt, die auch für die Beschichtung des Kristalls eingesetzt wird. Zwischen der Keramikmasse 22 und dem Lithiumniobat-Einkristall ist eine Diffusionssperre vorgesehen, die in den Figuren nicht dargestellt ist. Diese Diffusionssperre ist außerordentlich dünn und besteht vorzugsweise aus einem elektrisch leitfähigen Edelmetall.

### Der erfindungsgemäße Meßwertgeber wird in der Praxis wie folgt verwendet:

Es ist beabsichtigt, die Strömungsgeschwindigkeit eines beliebigen Mediums möglichst genau zu erfassen. Als Anwendungsbeispiele kommen z. B. die Messung von Gasvolumina, aber auch die Erfassung von gelieferten Wärmemengen aus Zentral- oder Fernheizungsanlagen aufgrund der entnommenen Wassermengen in Betracht.

Der Meßwertgeber wird zur Erfassung der Durchflußgeschwindigkeiten in einem Strömungsrohr so angeordnet, daß die Stromrichtung senkrecht auf seine Stirnseite 3 zu verläuft. Die Abtastplatte 6 liegt dabei in Stromrichtung hinter dem Staukörper 2 und mit ihren Planseiten parallel zu der einlaufenden, ungesteuerten Strömung. Im Bereich der Abrißkanten 4 bildet sich dann aufgrund des aero- oder hydrodynamischen Einflusses des Störkörpers 2 periodisch abwechselnd je ein Wirbel aus. Diese Wirbel laufen dann als Karman'sche Wirbelstraße stromabwärts, beaufschlagen das Abtastelement 6 abwechselnd von der einen und von der anderen Seite mit einer Druckänderung und vereinigen sich hinter dem Meßwertgeber 1 wieder zu einer Gesamtströmung. Die periodisch auf die Abtastplatte 6 einwirkenden Druckschwankungen führen zu einer elastischen Verformung der Abtastplatte 6, die sich auf das im Inneren eingebettete Piezoelement 16 fortpflanzt. Das Piezoelement 16 gibt bei Verformung elektrische Impulse an die mit dem Piezoelement kontaktierten Ableitungen 18 ab, die mit geeigneten, nicht dargestellten elektronischen Mitteln in eine Fließgeschwindigkeit und in der Folge in einen Volumenstrom umgerechnet werden können. Die periodisch an dem Abtastelement vorbeilaufenden Wirbel erzeugen auf diese Weise für ein bestimmtes Medium und eine bestimmte Fließgeschwindigkeit charakteristische Wechselspannungssignale, die meßtechnisch beliebig ausgewertet werden können. Wirbeldurchflußmesser erreichen mit dem skizzierten Aufbau eine sehr hohe Genauigkeit und sind zum Teil eichfähig.

Die erfindungsgemäßen Vorteile, nämlich Temperaturfestigkeit bis 700 °C und Temperaturschockfestigkeit bis 100 °C/sec. werden bei dem beschriebenen Aufbau im wesentlichen dadurch erreicht, daß das Piezokristall zunächst beidseitig mit einer leitfähigen keramischen Beschichtung versehen ist, dann von einer dünnen Ausgleichsschicht 17 aus einem Glasseidenlaminat umgeben und mittels nicht leitender keramischer Vergußmasse im Innenraum 10, 14 des Störkörpers 2 bzw. des Abtastelements 6 eingebettet wird. Das an sich mechanisch empfindliche Piezo-Einkristall wird von dieser Ausgleichsschicht 17 gegen mechanische Verspannungen geschützt, die bei extremen Temperaturgradienten aufgrund unterschiedlicher Temperaturausdehnungskoeffizienten der verwendeten Materialien entstehen können.

Die Ausgleichsschicht zwischen der leitenden keramischen Beschichtung und der keramischen Einbettung ist deshalb wirkungsvoll, weil mechanische Verspannungen aufgrund von Temperatureinwirkungen besonders in Richtung der jeweils größten Ausdehnung der verwendeten Bauelemente wirksam werden, also in vorliegendem Beispiel in Richtung der Längserstreckung des Piezoelements 16. Hier kann die Ausgleichsschicht einen gewissen Spielraum in einer Richtung parallel zu den Planseiten des Piezoelements 16 bzw. der Abtastplatte 6 bieten. In der für die Abtasteigenschaften maßgeblichen Richtung, nämlich senkrecht zu den Planseiten 13 der Abtastplatte 6, ist das Piezo-Einkristall besonders dünn und ändert folglich bei Temperaturänderungen seine geometrischen Abmessungen kaum. In dieser Richtung braucht die Ausgleichsschicht 17 kaum wirksam zu sein, so daß sie in Querrichtung dünn gehalten sein kann. Eine dünne Ausgleichsschicht 17 in dieser Richtung ist jedoch förderlich für die mechanische Ankopplung des Piezoelements 16 an die Abtastplatte 6.

Während die Ausgleichsschicht 17 an sich für eine Resistenz des Piezoelements 16 gegenüber hohen Temperaturgradienten vorteilhaft ist, bringt die sonstige beschriebene Materialauswahl insgesamt Vorteile für die Temperaturbeständigkeit. So wird der insoweit beschriebene Meßwertgeber mit seinen Materialien Edelstahl, keramische Vergußmasse und keramischer leitender Klebstoff sowie Glasseidenlaminat bis wenigstens 700°C nicht zerstört, wobei jedoch seine Funktionsfähigkeit bei ca. 400°C endet. Für die Langzeitstabilität des Lithiumniobat-Einkristalls ist es darüber hinaus förderlich, wenn eine Diffusionssperre aus einem Edelmetall zwischen dem Einkristall und dem elektrisch leitfähigen Klebstoff angeordnet ist, um auch bei länger andauernder, hoher Temperaturbelastung eine Diffusion von Metallatomen aus dem Klebstoff in das Kristall zu verhindern. Anderenfalls kommt es früher oder später zu einer Leitfähigkeitsveränderung des Piezoelements.

## Patentansprüche

1. Meßwertgeber für einen Wirbeldurchflußmesser mit einem Staukörper, mit einem stromab von dem Staukörper liegenden Abtastelement, sowie mit einem dem Abtastelement zugeordneten, darin eingebetteten elektromechanischen Wandler, **dadurch gekennzeichnet, daß** zwischen dem elektromechanischen Wandler und dem Abtastelement zumindest abschnittsweise eine verformbare Ausgleichsschicht vorgesehen ist.

2. Meßwertgeber nach Anspruch 1, **dadurch gekennzeichnet, daß** die Ausgleichsschicht ein Glasseidenlaminat ist.

3. Meßwertgeber nach einem der vorhergehenden Ansprüche, **dadurch gekennzeichnet, daß** der elektromechanische Wandler ein piezoelektrisches Element umfaßt.

4. Meßwertgeber nach einem der vorhergehenden Ansprüche, **dadurch gekennzeichnet, daß** das piezoelektrische Element ein Lithium-Niobat-Einkristall umfaßt.

5. Meßwertgeber nach einem der vorhergehenden Ansprüche, **dadurch gekennzeichnet, daß** das piezoelektrische Element im wesentlichen im Innern des Abtastelements angeordnet ist.

6. Meßwertgeber nach einem der vorhergehenden Ansprüche, **dadurch gekennzeichnet, daß** das piezoelektrische Element mittels eines elektrisch leitenden Klebstoffs mit elektrischen Leitungen kontaktiert ist.

7. Meßwertgeber nach einem der vorhergehenden Ansprüche, **dadurch gekennzeichnet, daß** zwischen dem piezoelektrischen Element und dem Klebstoff eine Diffusionssperre vorgesehen ist.

8. Meßwertgeber nach einem der vorhergehenden Ansprüche, **dadurch gekennzeichnet, daß** das Abtastelement aus zwei streifenartigen Bereichen zusammengesetzt ist, die zwischen sich einen Hohlraum einschließen.

9. Meßwertgeber nach einem der vorhergehenden Ansprüche, **dadurch gekennzeichnet, daß** das Abtastelement mit dem Staukörper gasdicht verbunden, inbesondere verschweißt ist.

10. Meßwertgeber nach einem der vorhergehenden Ansprüche, **dadurch gekennzeichnet, daß** das piezoelektrische Element in einem von Staukörper und Abtastelement begrenzten Hohlraums angeordnet und mittels einer nichtleitenden Vergußmasse mechanisch fixiert ist.
